(19) Europäisches Patentamt

European Patent Office

Office européen des brevets

(11) EP 0 982 891 B1

(12) **FASCICULE DE BREVET EUROPEEN**

(45) Date de publication et mention
de la délivrance du brevet:
**22.11.2006 Bulletin 2006/47**

(51) Int Cl.:
**H04J 14/02** *(2006.01)* **H04Q 11/00** *(2006.01)*

(21) Numéro de dépôt: **99402064.2**

(22) Date de dépôt: **16.08.1999**

(54) **Dispositif d'insertion/extraction de signaux optiques multiplexés en longueur d'onde**

Vorrichtung zum Ein-Ausfügen eines optischen Wellenlängenmultiplexsignales

Device for add-dropping wavelength multiplexed optical signals

(84) Etats contractants désignés:
**AT BE CH CY DE DK ES FI FR GB GR IE IT LI LU
MC NL PT SE**

(30) Priorité: **24.08.1998 FR 9810655**

(43) Date de publication de la demande:
**01.03.2000 Bulletin 2000/09**

(73) Titulaire: **ALCATEL**
**75008 Paris (FR)**

(72) Inventeurs:
• **Sotom, Michel**
**75015 Paris (FR)**
• **Chauzat, Corinne**
**91620 Nozay (FR)**
• **Ruggeri, Stéphane**
**78114 Magny Les Hameaux (FR)**
• **Ottolenghi, Paolo**
**20059 Vimercate (MI) (IT)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**EP-A- 0 769 859      EP-A- 0 838 918
WO-A-97/08574      WO-A-98/05133
WO-A-98/52306      US-A- 5 657 406
US-A- 5 712 717**

• **ANTONIADES N ET AL: "Simulation of ASE noise
accumulation in a wavelength add-drop
multiplexer cascade" IEEE PHOTONICS
TECHNOLOGY LETTERS, SEPT. 1997, IEEE,
USA, vol. 9, no. 9, pages 1274-1276, XP002101306
ISSN 1041-1135**

**Description**

L'invention concerne un dispositif d'insertion/extraction de signaux optiques multiplexés en longueur d'onde. Ce dispositif est destiné à être associé à une liaison optique transmettant un signal multiplex pour permettre d'en extraire certains des signaux optiques multiplexés et d'y substituer d'autres signaux optiques en exploitant les longueurs d'onde laissées disponibles par les signaux extraits.

L'insertion et l'extraction de signaux optiques de longueurs d'onde déterminées sont des opérations indispensables à la communication d'information dans les réseaux mettant en communication des usagers géographiquement disséminés. Il existe donc à cet effet des dispositifs permettant d'injecter des signaux optiques dans des canaux de transmission d'un signal multiplex qui sont établis à des longueurs d'onde prédéterminées et de récupérer sélectivement les informations transmises par les différents canaux. Ces dispositifs d'extraction/insertion sont notamment destinés à équiper des unités de branchement placées en des emplacements choisis des réseaux pour permettre des dessertes sélectives d'usagers.

Comme il est connu, il est particulièrement important d'obtenir de bonnes performances en matière de transmission des signaux optiques et en particulier d'assurer une uniformisation des pertes qui affectent les signaux au cours de leur transmission quelle que soit la longueur d'onde utilisée pour une transmission d'information dans une gamme déterminée de longueurs d'onde possibles.

Par ailleurs, les signaux qui transitent au travers d'un dispositif d'extraction/insertion par des canaux d'un signal multiplex, sans subir d'extraction ou d'insertion, n'empruntent pas le même trajet que ceux qui sont insérés localement dans des canaux libérés par des signaux extraits. Ils ne sont donc pas affectés par les mêmes pertes d'insertion, ce qui se traduit par des différences de niveau de puissance pour des signaux transmis par des canaux différents d'un signal multiplex apparaissant en sortie d'un dispositif d'extraction/insertion. Il est donc important d'éviter que des pertes d'insertion pénalisantes ne puissent apparaître du fait d'un dispositif pour certains des signaux optiques multiplexés qu'il transmet.

Comme il est connu, ces pertes peuvent être liées à une atténuation inégale pour les différentes longueurs d'onde exploitées pour les canaux du signal multiplex mis en oeuvre. Des perturbations peuvent aussi être introduites, dans les canaux exploités pour des insertions locales de signaux, par une réjection insuffisante des signaux extraits qui étaient préalablement transmis par ces canaux.

Le document ANTONIADES N ET AL : « Simulation of ASE noise accumulation in a wavelength add-drop multiplexer cascade » IEEE PHOTONICS TECHNOLOGY LETTERS SEPT.1997 , IEEE , USA VOL 9, N°9, pages 1274-1276, XP002101306 ISSN 1041-1135 , décrit un dispositif d'extraction/insertion de signaux optiques multiplexés en longueur d'onde comportant une entrée et une sortie pour un signal multiplex entre lesquelles des circuits de traitement sont insérés et permettent chacun l'extraction d'au moins un signal optique contenu dans des canaux du signal multiplex optique entrant et l'insertion d'au moins un signal optique dans le canal de signal multiplex qui est laissé disponible par le signal extrait. Les circuits sont reliés en série, entre l'entrée et la sortie du dispositif.

Le document WO 98/05133 décrit un dispositif d'extraction/insertion de signaux optiques multiplexés en longueur d'onde comportant deux chemins, correspondant à deux directions opposées. Ces deux chemins comportent chacun une pluralité de filtres réflectifs en série. L'atténuation résiduelle des filtres, dans la bande transmise, est exploitée en arrangeant l'ordre des filtres de telle sorte qu'elle compense les différences de gain dans la bande transmise.

L'invention propose un dispositif amélioré d'extraction/insertion de signaux optiques multiplexés en longueur d'onde comportant une entrée et une sortie pour un signal multiplex entre lesquelles des circuits de traitement sont insérés et permettent chacun l'extraction d'un signal optique contenu dans un parmi "N" des "M" canaux du signal multiplex optique entrant et l'insertion d'un signal optique dans le canal de signal multiplex qui est laissé disponible par le signal extrait.

Chaque circuit de traitement comporte un filtre optique d'extraction et un filtre optique d'insertion de signal pour un canal individuel correspondant à une longueur d'onde déterminée, ainsi qu'un commutateur optique individuel auquel sont raccordés un port d'extraction du filtre d'extraction, un port d'insertion du filtre d'insertion, ainsi qu'une entrée individuelle d'insertion et une sortie individuelle d'extraction du dispositif, aux fins d'extraction/insertion dans un canal. Les filtres d'extraction des circuits sont reliés en série, depuis l'entrée du dispositif et par ordre décroissant de longueurs d'onde de canal dans un ensemble d'extraction en sortie duquel les filtres d'insertion des circuits sont reliés en série et par ordre décroissant de longueurs d'onde de canal dans un ensemble d'insertion. Un port de sortie de signal multiplex de chacun des filtres est relié en entrée de signal multiplex du filtre suivant en série, entre l'entrée et la sortie du dispositif auxquelles le port d'entrée du premier filtre d'extraction et le dernier filtre d'insertion sont respectivement reliés.

Selon une caractéristique de l'invention, un atténuateur fixe d'ajustement de niveau est inséré entre la sortie de l'ensemble d'extraction par laquelle transite le signal multiplex en provenance du dernier filtre d'extraction et le port d'entrée du premier filtre de l'ensemble d'insertion par lequel est reçu ce signal multiplex.

Selon une caractéristique de l'invention, un filtre de réjection est incorporé dans chaque circuit, en aval du port de sortie de signal multiplex du filtre d'extraction du circuit, pour y augmenter le niveau de réjection vis-à-vis du signal optique qui y est extrait, ce filtre étant inséré, soit directement entre ce port de sortie et le port d'entrée de signal multiplex du filtre d'extraction, ou d'insertion, immédiatement suivant, pour un filtre d'extraction sur deux à partir du premier de série, soit entre le port d'entrée du filtre d'insertion du circuit et le port de sortie du filtre d'insertion, ou d'extraction, immédiatement précédent, auquel ce filtre de réjection est alors relié par son port d'entrée.

Selon une caractéristique d'une variante de l'invention, chaque circuit comporte deux filtres de réjection pour augmenter le niveau de réjection du circuit vis-à-vis du signal optique qui y est extrait, ces deux filtres étant raccordés l'un en aval du port de sortie de signal multiplex du filtre d'extraction du circuit dans l'ensemble d'extraction et l'autre en amont du port d'entrée du filtre d'insertion du circuit dans l'ensemble d'insertion.

Selon une caractéristique d'une autre variante de l'invention, un circuit de traitement comporte un filtre d'extraction dont le port d'extraction est raccordé à un premier diviseur optique pour permettre une transmission simultanée du signal optique qu'il extrait, d'une part, au filtre d'insertion du circuit pour réinsertion dans le signal multiplex sortant du dispositif et d'autre part, à une sortie individuelle d'extraction du dispositif qui est affectée au circuit.

Selon une autre caractéristique, un circuit de traitement comporte un second diviseur optique qui est relié à une entrée individuelle d'insertion de signal du dispositif pour permettre une transmission simultanée du signal reçu de cette entrée, d'une part, au filtre d'insertion du circuit et, d'autre part, à une sortie individuelle d'extraction du dispositif qui est affectée au circuit, cette transmission étant effectuée via au moins un commutateur du circuit.

Selon une autre caractéristique, le dispositif comporte des diviseurs optiques ayant deux sorties dissymétriques.

Selon une dernière caractéristique, les filtres d'insertion, d'extraction, de réjection sont du type filtre interférentiel à couches multiples, du type IFBG, du type MZ-IFBG, ou du type coupleur à fibre obtenu par fusion-étirage et comportant un réseau de Bragg en région centrale.

L'invention, ses caractéristiques et ses avantages sont développés dans la description qui suit en liaison avec les figures évoquées ci-dessous.

La figure 1 présente un schéma synoptique d'un exemple de dispositif d'extraction/insertion selon l'invention.

La figure 2 présente un schéma synoptique d'une variante de dispositif d'extraction/insertion selon l'invention

La figure 3 présente un schéma relatif à une seconde variante de dispositif d'extraction/insertion selon l'invention

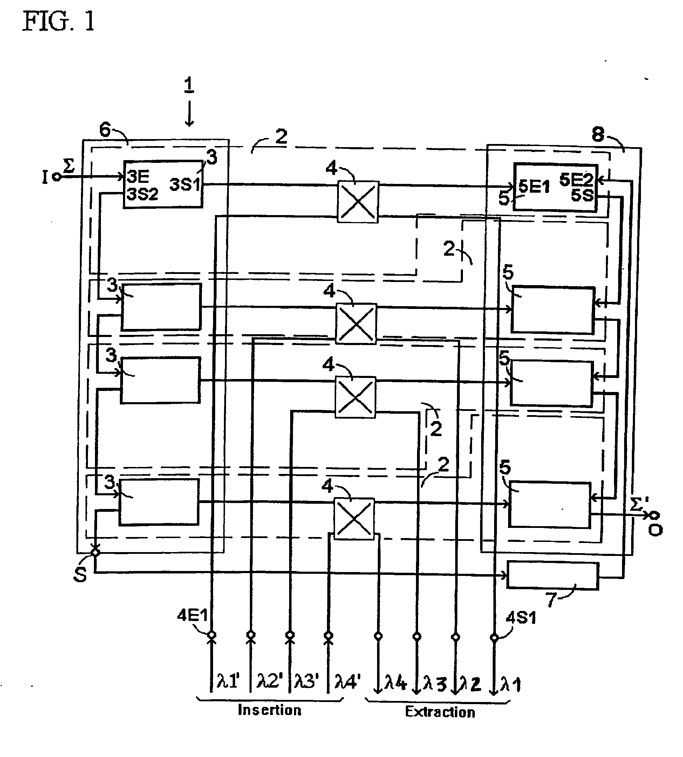

Le dispositif 1 d'extraction/insertion de signaux optiques multiplexés en longueur d'onde qui est présenté en figure 1 est prévu pour recevoir un signal multiplex optique Σ au niveau d'une entrée I. Le signal multiplex Σ est composé d'un nombre entier "M" de signaux optiques multiplexés transmis chacun par un canal ayant une longueur d'onde optique déterminée, différente pour chaque canal. Un nombre "N" des "M" signaux optiques multiplexés du signal Σ, qui sont transmis par l'intermédiaire de canaux correspondant à des longueurs d'onde déterminées à l'avance, sont susceptibles d'être extraits de ce signal multiplex Σ par le dispositif d'extraction/insertion. Ce dernier permet d'insérer "N" signaux optiques ayant une provenance différente pour constituer un signal multiplex Σ' avec les "M-N" signaux optiques multiplexés qui transitent au travers du dispositif par des canaux correspondant aux longueurs d'onde pour lesquelles une extraction n'est pas prévue à ce niveau. Ce signal multiplex Σ' est fourni à une sortie O du dispositif 1.

Une série de "N" circuits de traitement 2 est prévue dans le dispositif d'extraction/insertion. Chacun de ces circuits 2 comporte des moyens de filtrage sélectifs pour une des "N" longueurs d'onde qui sont exploitables à des fins d'extraction/insertion par le dispositif 1 et des moyens de commutation optique pour orienter les signaux susceptibles d'être extraits ou insérés à l'intérieur du dispositif.

Dans l'exemple proposé, chaque circuit 2 comporte au moins un filtre d'extraction optique 3, un commutateur optique 4 et un filtre d'insertion optique

Les filtres d'extraction 3 prévus pour les différents circuits 2. sont supposés de constitution identique, ils comportent chacun un port d'entrée 3E pour signal multiplex, un port de sortie dit d'extraction 3S1 pour un signal d'un canal déterminé et un port de sortie dit de transit 3S2 pour signal multiplex. Ils sont montés en série entre l'entrée 1 du dispositif 1 et une sortie S d'un ensemble d'extraction 6 qu'ils constituent. Le port d'entrée 3E d'un premier d'entre eux reçoit le signal multiplex entrant Σ, via l'entrée I. Dans la réalisation proposée sur la figure 1, les ports d'entrée des autres filtres d'extraction 3 sont respectivement reliés chacun au port de transit 3S2 du filtre d'extraction qui le précède. Chacun de ces autres filtres d'extraction reçoit un signal multiplex optique qui correspond au signal multiplex Σ diminué du ou des signaux extraits par le ou les filtres d'extraction qui le précède(nt) dans l'ensemble d'extraction 6.

Les filtres d'insertion 5 des circuits 2 sont de constitution identique et ils comportent chacun un port d'insertion 5E1, un port d'entrée 5E2 et un port de sortie 5S. Ils sont montés en série entre un atténuateur 7 et la sortie 0 du dispositif 1 entre lesquels ils forment un ensemble d'insertion 8. L'atténuateur 7 est raccordé à la sortie S de l'ensemble d'extraction 6 et le port d'entrée 5E2 du premier des filtres d'insertion 5, dans l'ensemble d'insertion 8, est raccordé en aval de l'atténuateur 7. Dans la réalisation proposée sur la figure 1, le port d'entrée 5E2 de chacun des autres filtres d'insertion 5 est relié au port de sortie 5S du filtre d'insertion qui le précède dans l'ensemble d'insertion 8.

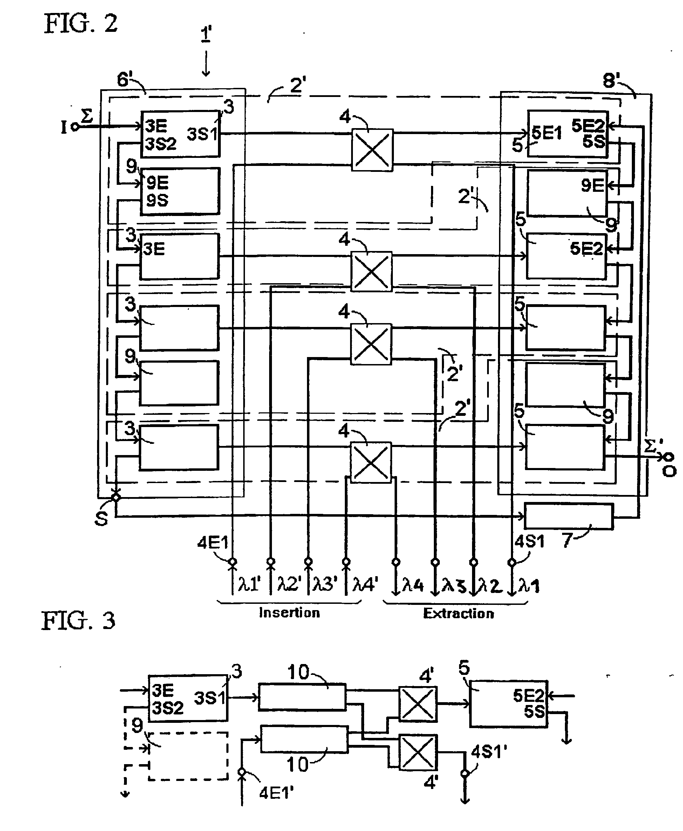

Les filtres d'extraction 3 et d'insertion 5 sont susceptibles d'être des filtres couramment dits IFBG (In Fiber Bragg Grating), comportant des réseaux de Bragg inscrits sur fibre. Ces filtres peuvent aussi être constitués par des coupleurs obtenus par fusion-étirage et comportant un réseau de Bragg dans leur partie centrale, ou par des réseaux de Bragg associés à des circulateurs. Des filtres interférentiels à couches multiples, couramment dits MIF (Multilayer Interference Filters), peuvent aussi être prévus comme envisagé en relation avec la variante présentée sur la figure 2.

Les commutateurs optiques 4 prévus dans les circuits de traitement 2 sont par exemple des commutateurs à deux entrées et deux sorties. Une première des entrées du commutateur optique 4 d'un circuit 2 est reliée au port d'extraction 3S1 du filtre d'extraction 3 du circuit pour permettre la commutation du signal optique extrait par ce filtre, soit vers une première des sorties du commutateur qui dessert un port local d'extraction correspondant 4S1 du dispositif 1, soit vers une seconde sortie du commutateur qui est reliée au port d'insertion 5E1 du filtre d'insertion 5 du circuit 2 considéré. La seconde entrée de chaque commutateur optique 4 est reliée à un entrée individuelle d'insertion 4E1 du dispositif pour permettre de substituer localement un signal optique au signal optique qui a été extrait par le filtre 3 du circuit dans le canal préalablement exploité par ce signal extrait. Le signal localement fourni par une entrée individuelle d'insertion et transmis vers un port d'insertion 5E1 peut alternativement être commuté vers le port d'extraction 4S1 du circuit 2 qui le comporte, par exemple à des fins de test, sous le contrôle d'un agencement de commande, non représenté, qui permet d'agir sur les commutateurs 4 du dispositif.

Dans l'exemple présenté sur la figure 1, il est prévu un nombre "N" de quatre circuits de traitement permettant chacun une insertion locale d'un signal optique, ces signaux exploitant des longueurs d'onde désignées par λ1', λ2', λ3' et λ4' qui sont respectivement égales aux longueurs d'onde λ1, λ2, λ3, λ4 exploitées par les signaux extraits au niveau du dispositif 1.

D'une manière générale, le dispositif 1 selon l'invention doit préférablement être positionné entre deux amplificateurs de la liaison multiplexe optique à laquelle il est associé à des fins d'extraction/insertion. La longueur d'onde optique de canal propre à chaque circuit de traitement 2 est prise en compte à l'occasion du positionnement de ce circuit par rapport aux autres circuits 2 dans le dispositif 1 qui les comporte. Ceci a pour objectif de prendre en compte la variation de gain en fonction de la longueur d'onde, couramment désignée par l'expression anglaise "gain-tilt", qui intervient dans un amplificateur optique au travers duquel transite un signal optique multiplex tel qu'envisagé ci-dessus. Cette variation de gain peut être considérée comme linéaire pour une gamme de puissance donnée en entrée d'amplificateur et elle se traduit par un gain augmentant en sens inverse de la longueur d'onde dans l'amplificateur considéré.

Les filtres d'extraction 3 de l'ensemble 6 et les filtres d'insertion de l'ensemble 8 sont donc identiquement répartis en fonction de la longueur d'onde du canal individuel de signal multiplex où chacun de ces filtres assure soit une extraction soit une insertion. Le filtre positionné en tête dans l'ensemble 6 ou 8 qui le comporte, est donc celui qui prend en compte le canal individuel dont la longueur d'onde est la plus longue et il est successivement suivi par les autres filtres de l'ensemble répartis par longueurs d'onde décroissantes. Le filtre d'extraction 3 d'un circuit de traitement 2 a le même rang dans l'ensemble d'extraction 6 du dispositif qui le comporte que le filtre d'insertion 5 du même circuit de traitement dans l'ensemble d'insertion 8 de ce dispositif.

Ceci permet de minimiser la différence de niveau de puissance de sortie entre ports d'extraction, soit donc pour les signaux de longueur d'onde supposées décroissantes λ1, λ2, λ3, λ4 apparaissant au niveau des entrées individuelles d'insertion 4E1 du dispositif, dans l'exemple proposé sur la figure 1. De même est minimisée la différence de niveau entre puissances d'entrée requises pour les signaux localement insérés, tels les signaux de longueurs d'onde supposées décroissantes λ1', λ2', λ3' et λ4'.

Le nombre "N" de circuits de traitement 2 d'un dispositif 1, ou de longueurs d'onde qu'il est susceptible d'exploiter, est déterminé en prenant en compte les pertes d'insertion affectant les divers signaux optiques, lors de leur passage au travers des filtres et des commutateurs.

Ces pertes sont notamment celles qui affectent le signal optique extrait et le signal multiplex en transit dans chaque filtre d'extraction. Dans l'exemple présenté en figure 1, ces pertes sont celles considérées comme intervenant entre le port d'entrée 3E et le port d'extraction 3S1 pour un signal extrait et entre ce port d'entrée 3E et le port de transit 3S2 pour le signal multiplex diminué du signal extrait.

Ces pertes sont aussi celles qui affectent d'une part un signal inséré dans un signal multiplex au niveau d'un filtre d'insertion et d'autre part le signal multiplex qui transite par ce filtre et qui subit l'insertion. Dans l'exemple présenté en figure 1, ces pertes sont celles considérées comme intervenant entre le port d'insertion 5E1 et le port de sortie 5S du filtre pour le signal inséré et entre le port d'entrée 5E2 et ce même port de sortie 5S dans le même filtre pour le signal multiplex reçu par ce filtre.

Ces pertes sont encore celles introduites par le commutateur optique 4 d'un circuit

D'une manière plus précise, les pertes d'insertion pour les signaux optiques multiplexés transitant par un dispositif 1, sans avoir la possibilité d'être extraits ou insérés, sont ici données par la formule:

$$IL\_agg = 2N \times IL\_thru$$

ou IL_thru correspond aux pertes dites de transit intervenant entre entrée de signal multiplex et sortie de signal multiplex, soit entre le port d'entrée 3E et le port de transit 3S2 pour un filtre d'extraction 3 ou entre le port d'entrée 5E2 et le port de sortie 5S pour un filtre d'insertion 5.

Les pertes d'insertion affectant un signal, inséré à une longueur d'onde susceptible d'être extraite, sont ici données par la formule:

$$IL\_AD = IL\_drop + IL\_sw + IL\_add + (2N - 2 - n) \times IL\_thru$$

ou

IL_drop correspond aux pertes dites d'extraction intervenant entre le port d'entrée 3E et le port d'extraction 3S pour un filtre d'extraction 3.

IL_sw correspond aux pertes intervenant au niveau du commutateur optique 3 traversé.

IL_add correspond aux pertes intervenant entre port d'insertion 5E1 et port de sortie 5S pour un filtre d'insertion 5, et ou "n" correspond au nombre de filtres placés entre le port de transit 3S2 d'un filtre d'extraction et le port d'entrée 5E2 du filtre d'insertion du même circuit.

Le dimensionnement d'un dispositif 1, dont les éléments constitutifs tels que filtres et commutateurs ont des pertes connues, s'effectue en choisissant un nombre "N" qui minimise l'expression:

IL_AD - IL_agg = IL_drop + IL_sw + IL_add - (N + 1) x IL_thru = k

Il est donc fonction des choix technologiques effectués.

Si, par exemple, il est prévu de mettre en oeuvre des filtres d'extraction et d'insertion de type interférentiel à couches multiples (MIF) et que les valeurs de perte considérées sont les suivantes:

IL_drop = IL_add = 1,5 dB IL_thru = 0,7 dB IL_sw = 1 dB

le nombre "N" correspond à INT(3,4/0,7) = 5 étant entendu que INT(x) correspond la fonction d'approximation de x, à sa valeur entière la plus proche.

La nature discontinue de cette fonction INT(x) fixe la limite supérieure dans l'optimisation de l'uniformisation qui peut être obtenue, sans imposer de contraintes excessivement rigides en ce qui concerne le choix d'un nombre N.

**[0042]** - Tant que l'expression IL_drop + IL_sw + IL_add - (N + 1) x IL_thru est supérieure à zéro, il est possible de réaliser un atténuateur, tel que l'atténuateur 7 sur la figure 1, d'une valeur égale à k qui permet de maximaliser l'uniformité entre signaux pour un dispositif 1 de dimension "N" donnée.

Comme déjà indiqué cet atténuateur agit sur les signaux multiplexés en longueur d'onde constituant le signal multiplex transmis de la sortie S de l'ensemble d'extraction 6 vers le port d'entrée 5E2 du premier filtre d'insertion 5 de l'ensemble d'insertion 8, en réduisant leur niveau vis-à-vis de celui des signaux insérés par l'intermédiaire des différents filtres d'insertion 5.

La première variante de réalisation présentée en figure 2 est plus particulièrement prévue pour le cas où la réjection propre à chaque filtre n'est pas suffisante pour éliminer toute possibilité qu'un résidu de signal optique extrait d'un canal individuel ne soit additionné à un signal localement inséré dans ce canal pour être transmis via la sortie O du dispositif 1.

Ceci peut notamment être le cas lorsque les filtres d'extraction 3 et d'insertion 5 sont des filtres interférentiels à couches multiples et ne permettent pas isolément d'atteindre le niveau de réjection nécessaire, chaque filtre n'ayant par exemple qu'un niveau de réjection de l'ordre de 10 dB.

A cet effet, il est prévu d'ajouter un filtre de réjection 9 dans chaque circuit de traitement 2' de manière à rehausser le niveau de réjection global du circuit. Dans le cas d'ajout de filtres de réjection 9, de type interférentiel à couches multiples, ce niveau de réjection global obtenu par circuit de traitement est alors de l'ordre de 30 dB, ce qui est considéré comme suffisant. Ces filtres sont soit du type de ceux précédemment évoqués ci-dessus, soit des filtres dits MZ-IFBG (Mach-Zehnder In Fiber Bragg Grating) dans lesquels des réseaux de Bragg sont inscrits dans une structure de Mach-Zehnder à fibre.

Selon une forme préférée de réalisation, les filtres de réjection 9 d'un dispositif 1' sont répartis de manière alternée entre les deux ensembles d'extraction 6' et d'insertion 8' du dispositif, par exemple l'un en aval des filtres d'extraction de rang impair et l'autre en amont des filtres d'insertion de rang pair.

Dans la variante de réalisation présentée sur la figure 2, le filtre de réjection 9 du premier circuit 2', correspondant à la longueur d'onde la plus longue, est placé dans l'ensemble d'extraction 6' entre le port de transit 3S2 du filtre d'extraction 3 de ce premier circuit et le port d'entrée 3E du filtre d'extraction 3 du circuit 2' qui le suit et qui correspond donc à la longueur d'onde immédiatement inférieure à celle du premier circuit.

Le filtre de réjection 9 du second circuit est par contre placé dans l'ensemble d'insertion 8' entre le port de sortie 5S du filtre d'extraction 3 du premier circuit et le port d'entrée 5E2 du filtre d'insertion 5 du circuit 2' suivant qui le comporte et ainsi de suite pour les autres filtres de réjection suivant le rang impair ou pair du circuit qui les comporte respectivement.

Quel que soit le cas, chaque filtre de réjection 9 est relié par un port d'entrée 9E. par l'intermédiaire duquel il reçoit le signal multiplex que lui transmet le filtre 3 ou 5 qu'il suit, et par un port de sortie 9S au filtre 3 ou 5 qu'il précède.

La réalisation, présentée sur la figure 3, correspond à une variante de circuit de traitement plus particulièrement prévue pour les dispositifs d'insertion/extraction où un signal optique multiplexé en longueur d'onde est destiné à être simultanément transmis dans deux directions différentes, dont l'une est celle prévue pour le signal multiplex dont il est issu.

Elle prévoit l'insertion d'un diviseur optique 10 entre le filtre d'extraction 3 du circuit de traitement et une des deux entrées d'un premier commutateur 4' qui se differencie d'un commutateur 4 par le fait qu'il ne comporte qu'une seule sortie active. Le diviseur optique 10 qui est raccordé au port d'extraction 3S1 du filtre d'extraction 3 est aussi relié à une des deux entrées d'un second commutateur 4' dont la sortie unique est en liaison avec une sortie individuelle d'extraction 4S1' du dispositif qui est propre au circuit. Le signal reçu par ce diviseur optique 10 est ainsi transmis ,d'une part, à la sortie individuelle d'extraction 4S1' et, d'autre part, au port d'insertion du filtre d'insertion 5 du circuit considéré auquel le premier commutateur 4' est relié par sa sortie unique.

Un second diviseur optique 10' est inséré dans le circuit de traitement considéré entre une entrée individuelle d'insertion 4E1' du dispositif et une seconde entrée de chacun des deux commutateurs 4'. Ce second diviseur permet de transmettre un signal optique parvenant par l'entrée individuelle d'insertion 4E1', à des fins de transmission via la sortie individuelle d'extraction 4S1' évoquée ci-dessus et à des fins d'insertion dans le signal multiplex reçu par le filtre d'insertion 5, via son port d'entrée 5E2, cette insertion prenant place dans le canal précédemment occupé par le signal qui a été extrait par le filtre 3 du même circuit.

Dans une forme préférée, les diviseurs optiques 10 ont des sorties dissymétriques de manière que le niveau du signal extrait qui est réinjecté par un circuit de traitement dans le signal multiplex sortant du dispositif, ne soit que très faiblement diminué, le niveau du signal extrait qui est transmis à la sortie individuelle d'extraction 4S1' étant réduit en conséquence à une valeur suffisante pour permettre sa prise en compte, par exemple après une amplification réalisée d'une manière non représentée.

## Revendications

1. Dispositif d'extraction/insertion de signaux optiques multiplexés en longueur d'onde comportant une entrée (I) et une sortie (O) pour un signal multiplex optique entre lesquelles des circuits de traitement (2) sont insérés et permettent chacun l'extraction d'un signal optique contenu dans un parmi "N" des "M" canaux du signal multiplex optique entrant et l'insertion d'un signal optique dans le canal de signal multiplex qui est laissé disponible par le signal extrait, dans lequel chaque circuit de traitement comporte un filtre optique d'extraction (3) et un filtre optique d'insertion (5) pour un canal individuel correspondant à une longueur d'onde déterminée, ainsi qu'un commutateur optique individuel (4) auquel sont raccordés un port d'extraction (3S1) du filtre d'extraction, une entrée individuelle d'insertion (4E1), une sortie individuelle d'extraction (4S1) et un port d'insertion (5E1) du filtre d'insertion, aux fins d'extraction/insertion dans un canal ; et dans lequel, pour la transmission du signal multiplex d'un filtre à l'autre aux fins d'extraction/ insertion, les filtres d'extraction des circuits sont reliés en série, depuis l'entrée du dispositif et par ordre décroissant de longueur d'onde de canal dans un ensemble d'extraction (6), en sortie duquel les filtres d'insertion sont reliés en série et par ordre décroissant de longueurs d'onde de canal dans un ensemble d'insertion (8), un port de sortie (3S2, 5S) de signal multiplex de chaque filtre étant relié à un port d'entrée (3E, 5E2) de signal multiplex du filtre suivant en série, entre l'entrée et la sortie du dispositif auxquelles le port d'entrée du premier filtre d'extraction et le port de sortie du dernier filtre d'insertion sont respectivement reliés ;
   **caractérisé en ce qu'**un atténuateur fixe (7) d'ajustement de niveau est inséré entre la sortie (S) de l'ensemble d'extraction (6 ou 6') par laquelle transite le signal multiplex en provenance du dernier filtre d'extraction et le port d'entrée (5E2) du premier filtre (5) de l'ensemble d'insertion par lequel est reçu ce signal multiplex.

2. Dispositif selon la revendication 1, dans lequel le nombre de circuits de traitement est égal à quatre.

3. Dispositif selon l'une des revendication 1 à 2, où un filtre de réjection (9) est incorporé dans chaque circuit, en aval du port de sortie (3S2) de signal multiplex du filtre d'extraction (3) du circuit, pour y augmenter le niveau de réjection vis-à-vis du signal qui y est extrait, ce filtre de réjection étant inséré, soit directement entre ce port de sortie et le port d'entrée (3E, 5E2) de signal multiplex du filtre d'extraction, ou d'insertion, immédiatement suivant pour un filtre d'extraction sur deux à partir du premier de série, soit entre le port d'entrée (5E2) du filtre d'insertion du circuit et le port de sortie (5S, 3E2) du filtre d'insertion, ou d'extraction, immédiatement précédent, auquel ce filtre de réjection est alors relié par son port d'entrée (9E).

4. Dispositif selon l'une des revendication 1 à 3, où chaque circuit comporte deux filtres de réjection (9) pour augmenter le niveau de réjection du circuit vis-à-vis du signal optique qui y est extrait, ces deux filtres étant raccordés l'un en aval du port de sortie de signal multiplex du filtre d'extraction du circuit dans l'ensemble d'extraction et l'autre en amont du port d'entrée du filtre d'insertion du circuit dans l'ensemble d'insertion.

5. Dispositif selon l'une des revendication 1 à 4, où un circuit de traitement comporte un filtre d'extraction (3) dont le port d'extraction (3S1) est raccordé à un premier diviseur optique (10), pour permettre une transmission simultanée du signal qu'il extrait, d'une part, au filtre d'insertion du circuit pour réinsertion dans le signal multiplex sortant du dispositif et, d'autre part, à une sortie individuelle d'extraction (4S1') du dispositif qui est affectée au circuit.

6. Dispositif selon la revendication 5, où un circuit de traitement comporte un second diviseur optique (10') relié à une entrée individuelle d'insertion de signal (4E1) du dispositif pour permettre une transmission simultanée du signal reçu de cette entrée, d'une part, au filtre d'insertion (5) du circuit et, d'autre part, à la sortie individuelle d'extraction (4S1') qui est affectée au circuit, cette transmission étant effectuée via au moins un commutateur (4') du circuit.

7. Dispositif selon l'une des revendications 5 ou 6, comportant des diviseurs optiques à deux sorties dissymétriques.

8. Dispositif selon l'une des revendications 1 à 7, dans lequel les filtres d'insertion, d'extraction, de réjection sont du type filtre interférentiel à couches multiples, du type IFBG, du type MZ-IFBG, ou du type coupleur à fibre obtenu par fusion-étirage et comportant un réseau de Bragg en région centrale.

**Claims**

1. A system for dropping/adding wavelength division multiplexed optical signals including an input (I) and an output (O) for an optical multiplex signal between which are processors (2) each of which is used for dropping an optical signal contained in one of "N" of the "M" channels of the incoming optical multiplex signal and adding an optical signal to the multiplex signal channel that is made available by the dropped signal, in which each processor includes a drop optical filter (3) and an add optical filter (5) for an individual channel corresponding to a particular wavelength, an individual optical switch (4) to which are connected a drop port (3S1) of the drop fitter, an individual add input (4E1), an individual drop output (4S1) and an add port (5E1) of the add filter, for dropping a signal from and adding a signal to a channel; and in which, to transmit the multiplex signal from one filter to the other for the purposes of dropping/adding signals, the drop filters of the circuits are connected in series from the input of the system and in order of decreasing channel wavelength in a drop subsystem (6) at the output of which the add filters are connected in series and in order of decreasing channel wavelength in an add subsystem (8), a multiplex signal output port (3S2, 5S) of each filter being connected to a multiplex signal input port (3E, 5E2) of the next filter in the series, between the input and the output of the system, to which the input port of the first drop filter and the output port of the last add filter are respectively connected;
the system being **characterized in that** a fixed level-adjusting attenuator (7) is inserted between the output (S) of the drop subsystem (6 or 6') through which the multiplex signal from the last drop filter passes and the input port (5E2) of the first filter (5) of the add subsystem by which the multiplex signal is received.

2. A system according to claim 1, wherein the number of processors is equal to 4,

3. A system according to any of claims 1 to 2, wherein a rejection filter (9) is incorporated in each circuit downstream of the multiplex signal output port (3S2) of the drop filter (3) of the circuit to increase therein the rejection level vis-à-vis the signal which is dropped there, the rejection filter being either directly between that output port and the multiplex signal input port (3E, 5E2) of the drop or add filter immediately following it for alternate drop filters from the first of the series or between the input port (5E2) of the add filter of the circuit and the output port (5S, 3E2) of the add or drop filter immediately preceding it to which input port (9E) of that rejection filter is then connected.

4. A system according to any of claims 1 to 3, wherein each circuit includes two rejection filters (9) to increase the rejection level of the circuit vis-à-vis the optical signal which is dropped there, one of the two filters being connected downstream of the multiplex signal output port of the drop filter of the circuit in the drop subsystem and the other upstream of the input port of the add filter of the circuit in the add subsystem.

5. A system according to any of claims 1 to 4, wherein a processor includes a drop filter (3) whose drop port (3S1) is connected to a first optical splitter (10) to enable simultaneous transmission of the signal which it drops to the add filter of the circuit for re-insertion in the multiplex signal leaving the system and to an individual drop output (4S1') of the system which is allocated to the circuit.

6. A system according to claim 5, wherein a processor includes a second optical splitter (10') connected to an individual signal add input (4E1) of the system to enable simultaneous transmission of the signal received from that input to the add filter (5) of the circuit and to the individual drop output (4S1') which is allocated to the circuit, such transmission being effected via at least one switch (4') of the circuit.

7. A system according to claim 5 or claim 6, including optical splitters with two asymmetric outputs.

8. A system according to any of claims 1 to 7, wherein the add, drop and rejection fibers are of the MIF, IFBG, MZ-IFBG type or the fiber coupler type obtained by fusion-drawing and including a centrally located Bragg grating.


**Patentansprüche**

1. Einfüge-/Extraktionsvorrichtung für optische Wellenlängenmultiplex-Signale, die einen Eingang (I) und einen Ausgang (O) für ein optisches Multiplexsignal umfasst, zwischen denen Verarbeitungsschaltungen (2) angeordnet werden und die jeweils die Extraktion eines optischen Signals, das in einem von "N" der "M" Kanäle des eingehenden optischen Multiplexesignals enthalten ist, und das Einfügen eines optischen Signals in den Kanal des Multiplexsignals ermöglichen, der durch das extrahierte Signal verfügbar geworden ist, in der jede Verarbeitungsschaltung einen optischen Extraktionsfilter (3) und einen optischen Einfügefilter (5) für einen einzelnen Kanal umfasst, der einer bestimmten Wellenlänge entspricht, sowie ein einzelnes optisches Schaltgerät (4), mit dem ein Extraktionsanschluss (3S1) des Extraktionsfilters, ein einzelner Einfügeeingang (4E1), ein einzelner Extraktionsausgang (4S1) und ein Einfügeanschluss (5E1) des Einfügefilters zum Zweck des Einfügens/der Extraktion in einem Kanal verbunden sind, und in dem die Extraktionsfilter der Schaltungen zur Übertragung des Multiplexsignals eines Filters sowie zu anderen Zwecken des Einfügens/der Extraktion in Reihe geschaltet sind, ausgehend von dem Eingang der Vorrichtung und in der Reihenfolge abnehmender Kanal-Wellenlänge in einer Extraktionseinheit (6), an deren Ausgang die Einfügefilter in Reihe geschaltet sind, und in der Reihenfolge abnehmender Kanal-Wellenlänge in einer Einfügeeinheit (8); wobei ein Ausgangsanschluss (3S2, 5S) des Multiplexsignals jedes Filters mit einem Eingangsanschluss (3E, 5E2) des Multiplexsignals des in der Reihe folgenden Filters verbunden ist, zwischen den Eingang und dem Ausgang der Vorrichtung, mit dem der Eingangsanschluss des ersten Extraktionsfilters und der Ausgangsanschluss des letzten Einfügefilters jeweils verbunden sind, **dadurch gekennzeichnet, dass** ein festes Dämpfungsglied (7) zur Pegelanpassung zwischen den Ausgang (S) der Extraktionseinheit (6 oder 6'), die das Multiplexsignal vom letzten Extraktionsfilter kommend passiert, und den Eingangsanschluss (5E2) des ersten Filters (5) der Einfügeeinheit, die dieses Multiplexsignal empfängt, eingefügt ist.

2. Vorrichtung gemäß Anspruch 1, in der die Anzahl an Verarbeitungsschaltungen gleich vier beträgt.

3. Vorrichtung gemäß einem der Ansprüche 1 oder 2, in der ein Sperrfilter (9) in jede Schaltung, nach dem Ausgangsanschluss (3S2) des Multiplexsignals des Extraktionsfilters (3) der Schaltung angeordnet ist, um den Sperrpegel gegenüber dem dort extrahierten Signal zu erhöhen, wobei dieser Sperrfilter entweder direkt zwischen diesen Ausgangsanschluss und den Eingangsanschluss (3E, 5E3) für das Multiplexsignal des unmittelbar folgenden Extraktions- oder Einfügefilters, für einen von zwei Extraktionsfiltern, ausgehend vom ersten der Reihe, oder zwischen den Eingangsanschluss (SE2) des Einfügefilters der Schaltung und den Ausgangsanschluss (5S, 3E2) des unmittelbar vorhergehenden Einfüge- oder Extraktionsfilters eingefügt wird, mit dem dieser Sperrfilter dann über seinen Eingangsanschluss (9E) verbunden ist.

4. Vorrichtung gemäß einem der Ansprüche 1 bis 3, in der jede Schaltung zwei Sperrfilter (9) umfasst, um den Sperrpegel der Schaltung gegenüber dem dort extrahierten optischen Signal zu erhöhen, wobei einer dieser beiden Filter nach dem Ausgangsanschluss für das Multiplexsignal des Extraktionsfilters der Schaltung in der Extraktionseinheit und der andere vor dem Eingangsanschluss des Einfügefilters der Schaltung in der Einfügeeinheit angeschlossen ist.

5. Vorrichtung gemäß einem der Ansprüche 1 bis 4, in der eine Verarbeitungsschaltung einen Extraktionsfilter (3) umfasst, dessen Extraktionsanschluss (3S1) mit einem ersten optischen Teiler (10) verbunden ist, um die gleichzeitige Übertragung des von ihm extrahierten Signals einerseits an den Einfügefilter der Schaltung zum Wiedereinfügen in das Multiplexsignal, das die Schaltung verlässt, und andererseits an einen einzelnen Extraktionsausgang (4S1') der Vorrichtung, die der Schaltung zugeordnet ist, zu ermöglichen.

**6.** Vorrichtung gemäß Anspruch 5, in der eine Verarbeitungsschaltung einen zweiten optischen Teiler (10') umfasst, der mit einem einzelnen Einfügeeingang für das Signal (4E1) der Vorrichtung verbunden ist, um die gleichzeitige Übertragung des von diesem Eingang empfangenen Signals einerseits an den Einfügefilter (5) der Schaltung und andererseits an den einzelnen Extraktionsausgang (4S1'), der der Schaltung zugeordnet ist, zu ermöglichen, wobei diese Übertragung über mindestens ein Schaltgerät (4') der Schaltung durchgeführt wird.

**7.** Vorrichtung gemäß einem der Ansprüche 5 oder 6, die optische Teiler mit zwei asymmetrischen Eingängen umfasst.

**8.** Vorrichtung gemäß einem der Ansprüche 1 bis 7, in der die Einfüge-, Extraktions- und Sperrfilter vom Typ Mehrfachschicht-Interferenzfilter, vom Typ IFBG, vom Typ MZ-IFBG oder vom Typ faseroptischer Koppler sind, der durch Streckformung gefertigt und im mittleren Bereich mit einem Bragg-Gitter ausgerüstet ist.

FIG. 1

FIG. 2

Insertion     Extraction

FIG. 3